# EUROPEAN PATENT SPECIFICATION

(11) **EP 1 743 464 B1**
(45) Date of publication and mention of the grant of the patent: **18.04.2012**
(21) Application number: 05741024.3
(22) Date of filing: 04.05.2005
(51) Int. Cl.: H04L 12/58, H04L 29/08, H04L 29/12, H04L 29/06

(54) **METHOD FOR PROCESSING MESSAGES**
VERFAHREN ZUM VERARBEITEN VON NACHRICHTEN
METHODE POUR TRAITER DES MESSAGES

(30) Priority: 04.05.2004 US 568118 P
(43) Date of publication of application: 17.01.2007
(73) Proprietor: Nokia Corporation, 02150 Espoo (FI)
(72) Inventor: KISS, Krisztian, Del Mar, CA 92014 (US); BAJKO, Gabor, H-1092 Budapest (HU)
(74) Representative: Style, Kelda Camilla Karen
(86) International application number: PCT/IB2005/001553
(87) International publication number: WO 2005/107195

(56) References cited:
- WO-A-02/063486
- WO-A-03/065750
- US-A1- 2004 068 584
- CROCKER D ET AL: "Common Presence and Instant Messaging (CPIM) (draft-ietf-impp-cpim-03.txt)" IETF STANDARD-WORKING-DRAFT, INTERNET ENGINEERING TASK FORCE, IETF, CH, 14 August 2002 (2002-08-14), XP015002047 ISSN: 0000-0004

## Description

### Background of the Invention

### Field of the Invention

The present invention relates to presence (PRES) and instant messaging (IM) services.

### Background to the Present Invention

Communication systems providing wireless communication for user equipment are known. An example of a wireless system is the public land mobile network (PLMN). PLMNs are commonly based on cellular technology. In cellular systems, a base transceiver station (BTS) or similar access entity services mobile user equipment (UE) via a wireless interface between these entities. The communication on the wireless interface between the user equipment and elements of the communication network can be based on the appropriate communications protocol. The operation of a base station apparatus and other apparatus required for the communication can be controlled by one or several control entities.

One or more gateway nodes may be provided for connecting the cellular access network to other networks, for example to a public switched telephone network (PSTN) and/or other communication networks such as an IP (internet protocol) and/or other packet switched data networks. In such arrangements, the mobile communications network provides an access network enabling a user with wireless user equipment to access external networks, hosts, or services offered by specific service providers.

An example of the type of service that may be offered to a user such as a subscriber to a communication system are so called presence services. Some of the communication systems enabled to offer presence services are known as internet protocol (IP) multimedia networks, via an IP multimedia core network subsystem (IMS). The IMS includes various network entities for the provision of multimedia services. IMS services are intended to offer, amongst other services, IP based packet data communication sessions between mobile user equipment. The packet data can carry presence information. The presence service utilises a server to accept information, store it and distribute it. The information stored may relate for example to the user' s willingness to communicate or the capability for communication, or it may be general information relation to the user, or graphic data. The service offers users the opportunity to receive status information relating to one or more other users.

Various types of services are provided by means of different application services (AS) over IMS. The IMS domain is for ensuring that multimedia services are adequately managed. The IMS domain commonly supports the session initiation protocol (SIP) as developed by the internet engineering task force (IETF). The session initiation protocol is an application-layer control protocol for creating, modifying and terminating sessions with one or more participants (end points). SIP was generally developed to allow the initiation of a session between two or more end points in the internet by making these end points aware of the session semantics. A user connected to a SIP based communication system may communicate with various entities of the communication system based on standardised SIP messages.

The session initiation protocol SIP is for example defined in the IETF specification RFC 3261.

Presence services which allow the notification for example about a person's availability or status to be sent directly to a recipient service are currently implemented according to the third generation partnership protocol (3GPP) standards via the session initiation protocol (SIP). In this regard reference is made to the 3GPP IMS/3GPP2 MMD (Multimedia Domain) Presence Service Stage-3 described in the specification 3GPP TS 24.141/3GPP2 X.P0027.2.

In the IETF specification RFC 3859, a common protocol for presence is defined. In particular, this document defines a protocol independent presence PRES URI (universal resource identifier) scheme. The IETF specification RFC 3860 defines a protocol independent instant messaging IM URI scheme. Instant messaging is a means for sending small, simple messages that are delivered immediately to online users. Definitions can be found in RFC 2779/RFC 2778.

Reference is also made to RFC 3861 which describes a mechanism for address resolution for instant messaging and presence services.

Presence user agents (PUA) and so-called watchers may initiate attempts for presence information publication or subscription for presence information state changes as described in the 3GPP documents using the PRES URI scheme. PUA and watchers are logical roles, which may be implemented by UE or application server AS in the IMS network. PUA is an entity publishing presence information, while a watcher is an entity subscribing to presence information state changes.

Messaging agents may initiate instant messaging communication, using for example SIP messaging, using the IM URI scheme.

IETF Standard Working Internet draft XP015002047 (draft-ietf-impp-cpim-03) describes semantics and data formats for instant messaging and online presence services. An abstract instant messaging service and an abstract presence service are disclosed, in which a domain name lookup attempts to locate service records which specify the next-hop server.

US 2004/0068584 describes a method and apparatus for routing wireless village messages in an IMS network. A message constructed according to SIP but having an address scheme indicating a protocol of the wireless village network is converted into a message with an address scheme indicating SIP, wherein the wireless village protocol is indicated in a new user URI parameter.

WO 02/063486 describes a method and device of displaying contact information of a plurality of individuals for a subscriber of the contact information.

However, the current 3GPP specifications do not disclose or suggest how for example, user equipment can handle the PRES URI scheme and the IM URI scheme.

### Summary of the Invention

It is therefore an aim of embodiments of the present invention to address the problem with the described systems.

According to a first aspect of the invention, a method for processing messages in a wireless communication network comprising the steps of: receiving a message, said message being either a presence service message or an instant messaging service message; publishing service records in a domain name service system pointing to an entry point of the wireless communication network that can process a presence service message and an entry point of the wireless communication network that can process an instant messaging service message; if the received message is a presence service message, querying a first database for a user identity of the wireless communication network corresponding to the presence identity information indicated in the received message; if the received message is an instant messaging service message, querying said first database for a user identity of the wireless communication network corresponding to the instant messaging identity information indicated in the received message; and if the message is an instant messaging service message, querying a second database for a network node serving the user identity; and transmitting the message to the network node serving the user identity.

The message processing node can be a call session control function node.

The method can also comprise the step of transmitting the message to a presence server if the message is a presence service message.

The second database can be a home subscriber server.

The network node serving the user identity can be a serving call session control function node.

According to a second aspect of the invention, a system for a wireless communication system is provided. The system comprises means for receiving a message, said message being either a presence service message or an instant service message; means for publishing service records in a domain name service system pointing to an entry point of the wireless communication network that can process a presence service message and an entry point of the wireless communication network that can process an instant messaging service message; means for querying a first database for determining a user identity within the wireless communication system based on identity information indicated in the received message; and means for querying a second database for a network node serving the user identity; and means for transmitting the message to a network node serving the user identity.

The system can further comprise means for constructing a first domain name based on a domain name indicated in a message, means for performing a domain name system query, means for transmitting a message to a network address obtained from a domain name system query..

The system can further comprise a database for storing user identification information for a messaging protocol and corresponding user identities for the wireless communication network.

The system can further comprise means for constructing a first domain name based on a domain name indicated in a message, means for performing a domain name system query, means for transmitting a message to a network address obtained from a domain name system query.

The system can further comprise a protocol gateway node.

The system can further comprise a presence server node.

### Brief Description of Drawings

For a better understanding of the present invention and as to how the same may be carried into effect, reference will now be made by way of example only to the accompanying drawings in which:
Figure 1 is a schematic diagram of an architecture supporting presence services;
Figure 2 is a schematic diagram illustrating message exchange in a first embodiment of the present invention;
Figure 3 is a schematic diagram illustrating message exchange in a second embodiment of the present invention; and
Figure 4 is a schematic diagram illustrating message exchange in a further embodiment of the present invention.

### Detailed Description of Preferred Embodiments

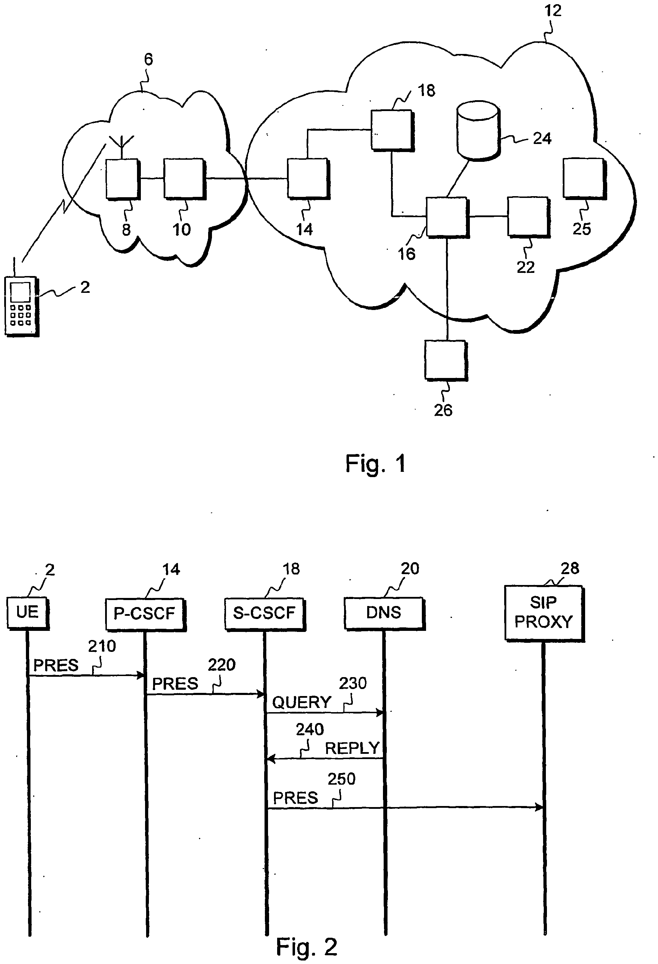

Figure 1 is a schematic diagram illustrating an architecture extension of the 3GPP IMS (IP Multimedia Subsystem) / 3GPP2 MMD (Multimedia Domain) defined in 3GPP TS 23.228 / 3GPP2 X.P0013-002 respectively which can be used to support PRES and IM URI schemas. Certain embodiments of the present invention will be described by way of example with reference to the exemplifying architecture of a third generation (3G) mobile communication system. However, it would be understood that embodiments of the present invention may be applied to any other suitable form of communication systems.

The third generation partnership project (3GPP) has defined reference architecture for the third generation (3G) core network which will provide the users of user equipment with access to multimedia and presence services. This core network is divided into three principal domains. These are the circuit switched domain packet, the packet switched domain and the internet protocol multimedia subsystem (IMS) domain.

User equipment 2 is arranged to communicate via a radio interface 4 with a radio access network (RAN) 6. The radio access network comprises a base transceiver station 8. The radio access network 6 in practice will comprise a number of base transceiver stations although only one is shown in figure 1 for clarity. The user equipment is arranged to communicate with the base transceiver station 8. The radio access network 6 also comprises at least one radio network controller RNC 10. Each RNC 10 is arranged to control a plurality of base transceiver stations 8. The RAN 6 is connected to an IMS domain.

The IMS 12 domain comprises a number of call session control functions CSCF. The call session control functions can be divided into various categories such as a proxy call session control function (P-CSCF) 14, an interrogating call session control function (I-CSCF) 16, and a serving call session control function (S-CSCF) 18. In practice there will be many more of these CSCFs which have been omitted for clarity. In the IMS 12, the P-CSCF 14 is connected to the S-CSCF 18. The S-CSCF 18 is connected to the I-CSCF 16. The I-CSCF may be in the same IMS domain or in a different IMS domain.

The IMS 12 can be connected to a domain name server (not shown). The functionalities of the domain name server can also be provided by a node of the IMS 12, by a dedicated DNS server node or as one service provided by a node.

The IMS 12 also contains in the example of figure 1 a protocol gateway 22. The IMS 12 may also contain a SIP proxy.

A mapping database 24 is also provided. This mapping database may be in the IMS 12 domain or external there to, i.e. it can be located in a core network (CN) or for example another IMS.

Figure 1 also illustrates a SIP client 26, which in this example is an external client, i.e. external to the IMS 12. The SIP client may be any SIP client, such as an external non-IMS SIP client or an IMS client.

Figure 1 also illustrates a presence server 25 in the IMS. Connections between the presence server and other nodes in the IMS are not explicitly illustrated in figure 1 for clarity. The presence server 25 can also be located outside the IMS 12, for example in another IMS or in another network.

It should be appreciated that the system shown in figure 1 is not comprehensive but shows those elements involved in embodiments of the present invention. It should also be appreciated that the connections between the various entities shown in figure 1 may be different in alternative embodiments of the present invention. In some embodiments of the present invention, some of the elements may be omitted.

Embodiments of the present invention are arranged to allow a user equipment to address a request using a PRES URI or an IM URI. Thus, the behaviour defined in the 3GPP specifications discussed previously needs to be modified.

Figure 2 shows a signal flow in an embodiment of the present invention. The example shown in Figure 2 shows an example using a PRES URI. However it should be appreciated that this signal flow can also be used with IM URI request. Those elements shown in figure 2 which are the same as those in figure 1 are referenced by the same reference numerals.

When the user equipment 2 generates either:
1. A SIP PUBLISH or a SIP SUBSCRIBE request using a PRES: URI in the Request-URI, for example pres: Joe@example.com or
2. A SIP MESSAGE or a SIP INVITE request using an IM: URI in the Request-URI, for example im:Joe@example.com.
then in step 210, the request is forwarded to the P-CSCF 14.

In step 220, the request received by the P-CSCF 14 from the UE 2 in step 210 is routed to the S-CSCF 18. This can be done in accordance with standard IMS routing behaviour utilising the SIP service-route extension, i.e. the UE indicates the S-CSCF in a header field in the request.

In step 230, when the S-CSCF receives the request from the P-CSCF specifying either a PRES: URI or an IM: URI in the Request-URI, the S-CSCF will send a query in step 230 to a DNS server 20. In other words, a DNS look up is performed on the request URI. The look up first attempts to locate a SRV RR (service resource record) associated with the domain of the URI, such as a _pres._sip.example.com RR. If such a RR is not found, S-CSCF performs a look up for the domain name example.com. DNS servers will follow the standard procedures in RFC 2782, and the functioning of the DNS system is therefore not described here in any further detail. In step 240, the DNS server returns a reply to the query. In step 250, S-CSCF transmits the message to the node found in the DNS query, in the example of figure 2 to an external SIP proxy. The destination could also be a presence' server in the same or another IMS, or a presence server in another network.

Depending on the protocol the other end implements (the other end point is represented by the URI in the Request-URI), the returned DNS response could point to: a protocol gateway (either inside the same IMS/MMD network or outside) if the other endpoint implements a presence/IM protocol other than SIP/SIMPLE; a SIP proxy outside the IMS/MMD network if the other endpoint implements SIP/SIMPLE but not an IMS endpoint; another IMS/MMD networks I-CSCF if the other endpoint is an IMS endpoint in another domain; or an I-CSCF inside the same IMS/MMD network if the other endpoint is an IMS endpoint in another domain.

For example, if the request type in URI contains pres:joe@example.com the S-CSCF will first attempt to locate the resource record (DNS RR) _pres._sip.example.com. Generally, if the target system supports SIP for presence services, it will publish a _pres._sip resource record pointing to a node which can process SIP messages associated with presence services. The node can be a SIP server. If the target system does not support presence services using SIP but some other protocol, the target system can provide a protocol gateway for translating between PRES SIP and the locally supported protocol, in which case the system can publish a _pres._sip RR pointing to the protocol gateway.

Resource records indicating instant message service can be construed in a similar way. For example, if the request type in URI contains im:joe@example.com the S-CSCF will first attempt to locate the resource record (DNS RR) _im._sip.example.com.

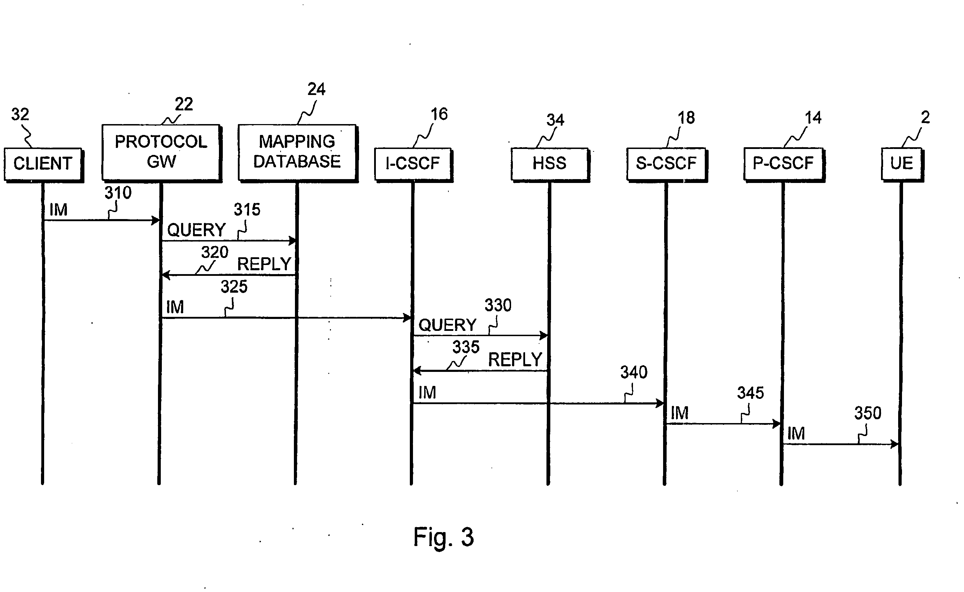

Reference is now made to figure 3 which shows a signal flow in a further embodiment of the present invention. The signal flow illustrated in figure 3 illustrates how IMS users can be addressable with an IM.URI.

DNS service resource records (SRV RR) pointing to the entry point of that specific IMS network are published by the IMS in the DNS system. The entry point can be an I-CSCF, in which case a resource record pointing to that I-CSCF is published. In such a case, the I-CSCF is advantageously arranged to support the use of SIP protocol for presence and instant messaging services. The entry point can also be a protocol gateway capable of translating between protocols, in which case a resource record pointing to that protocol gateway is published. Preferably, a resource record is published for each instant messaging or presence service protocol supported by the protocol gateway.

In the example of figure 3, an instant messaging client 32 sends an instant message (IM) to a protocol gateway 22 in step 310. In this example, the instant messaging client 32 uses a protocol which is not supported internally by the IMS,' but supported by the protocol gateway 22 of the IMS. The instant messaging client is able to find the protocol gateway via a resource record published by the IMS, pointing to the protocol gateway. The protocol gateway 22 sends 315 a query to the mapping database 24 to discover an IMS public user identity corresponding to the IM URI given in the message received from the client 32. Next, the mapping database 24 responds 320 with a reply to the query, indicating a corresponding IMS public user identity. In step 325, the protocol gateway 22 transmits the message to an I-CSCF 16 using a protocol supported internally by the IMS, such as the SIP protocol, and indicating the discovered IMS public user identity. Next, the I-CSCF queries 330 a home subscriber server (HSS) 34 to find the S-CSCF serving the UE 2 associated with the IMS public user identity. The HSS 34 replies 335 indicating the correct S-CSCF, whereafter the I-CSCF transmits 340 the message to the S-CSCF 18. The S-CSCF routes 345 the message to the P-CSCF 14, which in turn routes 350 the message to the UE 2.

In a case in which the external client 32 uses an instant messaging protocol supported directly by an I-CSCF, the signalling can be slightly different from that of figure 3. In such a case, the external client 32 transmits the instant message directly to the I-CSCF. The external client is able to do this, since the in this example the IMS publishes a DNS resource record indicating support for that protocol and pointing to the I-CSCF. In the case of supporting instant messaging using the SIP protocol, such a resource record could be of the form _im._sip.example.com. Upon receiving the message, the I-CSCF finds out the corresponding IMS public user identity by querying the mapping database. After finding out the IMS public user identity, the I-CSCF continues by querying the HSS 34 as shown in figure 3.

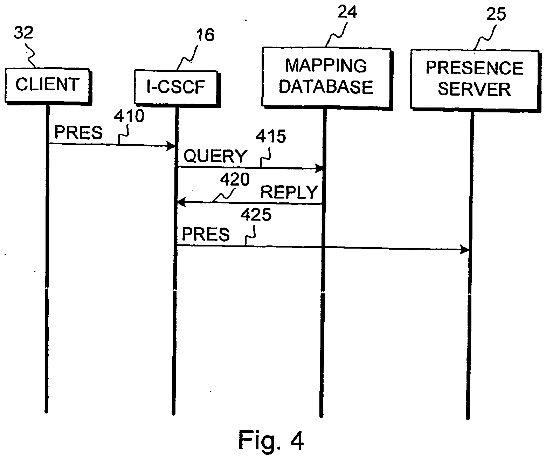

Figure 4 illustrates a possibility to provide signalling in a case, where a presence service message is addressed to the IMS. In step 410 a client 32 transmits a presence service message to the I-CSCF 16. As described previously, the client 32 is able to do that as the IMS publishes a DNS resource record pointing to the I-CSCF. The client 32 can be an external or an internal client in relation to the IMS. After receiving the message, the I-CSCF queries 415 a mapping database to find out an IMS public user identity corresponding to the identity information indicated in the message. The mapping database transmits 420 a reply indicating an IMS public user identity. In step 425, the I-CSCF transmits the message to a presence server 25 in the IMS, indicating the IMS public user identity.

In a further embodiment of the invention, before the step 425 of transmitting the message to a presence server, the I-CSCF queries a database to find out which presence server manages presence status information associated with the IMS public user identity. The database can be for example a home subscriber server (HSS).

The RRs may be provided e.g. by the carrier system. The mappings may be entered into the mapping database e.g. at the time of subscribing.

It is noted that while the preceding description illustrates various embodiments of the invention within a 3G cellular telecommunications system, the invention is not limited to a so called 3G cellular system, but can be implemented in different types of cellular telecommunication systems as well.

Although described in the context of particular embodiments, it will be apparent to those skilled in the art that a number of modification and various changes to these teachings may occur. Thus while the invention have been particularly shown and described with respect to the one or more preferred embodiments thereof, it will be understood by those skilled in the art that various modifications and changes may be made without departing from the scope of the invention as described by the claims.

## Claims

1. Method for processing messages in a wireless communication network (12) comprising the steps of:
receiving a message, said message being either a presence service message or an instant messaging service message;
publishing a service resource records in a domain name service system pointing to an entry point (22,16) of the wireless communication network that can process a presence service message and publishing a service resource record in the domain name service system pointing to entry point (22, 16) that can also process an instant messaging service message;
if the received message is a presence service message, querying (315, 415) a first database for a user identity (320,420) of, the wireless communication network corresponding to the identity information indicated in the received presence service message;
if the received message is an instant messaging service message, querying said first database (24) for a user identity of the wireless communication network corresponding to the identity information indicated in the received instant messaging service message;
if the message is an instant messaging service message, querying (330) a second database (34) for a network node (18) serving the user identity; and
transmitting the message (340) to the network node (18) serving the user identity.

2. A method according to claim 1, wherein the message is received by a call session control function node.

3. A method according to claim 1, wherein the wireless communication network is an internet protocol multimedia core network subsystem.

4. Method according to claim 1, comprising the step of transmitting the message (425) to a presence server (25) if the message is a presence service message.

5. Method according to claim 1, wherein the second database is a home subscriber server (34).

6. Method according to claim 1, wherein the network node serving the user identity is a serving call-session control function node (18).

7. A system for a wireless communication system, comprising:
means for receiving a message, said message being either a presence service message or an instant service message;
means for publishing service resource records in a domain name is service system pointing to an entry point (22,16) of the wireless communication network that can process a presence service message and publishing a service resource record in the domain name service system pointing to entry point (22, 16)
that can also process an instant messaging service message;
means for querying (315,415) a first database (24) for determining a user identity within the wireless communication system based on identity information indicated in the received message; and
means for querying (330) a second database (34) for a network node serving the user identity (18), if the received message is an instant messaging service message and
means for transmitting the message (340) to a network node (18) serving the user identity.

8. A system according to claim 7, wherein the wireless communication network is an internet protocol multimedia core network subsystem.

9. The system of claim 7, further comprising:
means (18) for constructing a first domain name based on a domain name indicated in a message,
means (18) for performing a domain name system query (230), and
means (18) for transmitting a message to a network address obtained from a domain name system query.

10. The system of claim 7 or 9, further comprising:
a database (24) for storing user identification information for a messaging protocol and corresponding user identities for the wireless communication network.

11. A system according to claim 7, further comprising a protocol gateway node (22).

12. A system according to claim 7, further comprising a presence server node (25).

## Patentansprüche

1. Verfahren zum Verarbeiten von Nachrichten in einem drahtlosen Kommunikationsnetz (12), das folgende Schritte umfasst:
Empfangen einer Nachricht, wobei die Nachricht entweder eine Presence Service-Nachricht oder eine Instant Messaging Service-Nachricht ist;
Veröffentlichen eines Service Resource Records in einem Domain Name Service System, das auf einen Eintrittspunkt (22, 16) des drahtlosen Kommunikationsnetzes hinweist, welches eine Presence Service-Nachricht verarbeiten kann, und Veröffentlichen eines Service Resource Records in dem Domain Name Service System, das auf den Eintrittspunkt (22, 16) des drahtlosen Kommunikationsnetzes hinweist, welches ebenfalls eine Presence Service-Nachricht verarbeiten kann;
Ist die empfangene Nachricht eine Presence Service-Nachricht, Abfragen (315, 415) einer ersten Datenbank nach einer Benutzeridentität (320, 420) des drahtlosen Kommunikationsnetzes, die den Identitätsinformationen entspricht, die in der empfangenen Presence Service-Nachricht angegeben sind;
Ist die empfangene Nachricht eine Instant Messaging Service-Nachricht, Abfragen der ersten Datenbank (24) nach einer Benutzeridentität des drahtlosen Kommunikationsnetzes, die den Identitätsinformationen entspricht, die in der empfangenen Instant Messaging Service-Nachricht angegeben sind;
Ist die Nachricht eine Instant Messaging Service-Nachricht, Abfragen (330) einer zweiten Datenbank (34) nach einem Netzknoten (18), der für die Benutzeridentität zuständig ist; sowie Übermitteln der Nachricht (340) an den Netzknoten (18), der für die Benutzeridentität zuständig ist.

2. Verfahren nach Anspruch 1, wobei die Nachricht durch einen Call Session Control Function-Knoten empfangen wird.

3. Verfahren nach Anspruch 1, wobei das drahtlose Kommunikationsnetz ein Internet-Protokoll-Multimedia-Kernnetz-Subsystem ist.

4. Verfahren nach Anspruch 1, umfassend den Schritt des Übermittelns der Nachricht (425) an einen Präsenzserver (25), falls die Nachricht eine Presence Service-Nachricht ist.

5. Verfahren nach Anspruch 1, wobei die zweite Datenbank ein Home Subscriber Server (34) ist.

6. Verfahren nach Anspruch 1, wobei der Netzknoten, der für die Benutzeridentität zuständig ist, ein Call Session Control Function-Knoten (18) ist.

7. System für ein drahtloses Kommunikationssystem, umfassend:
Mittel zum Empfangen einer Nachricht, wobei die Nachricht entweder eine Presence Service-Nachricht oder eine Instant Service-Nachricht ist;
Mittel zum Veröffentlichen von Service Resource Records in einem Domain Name Service System, das auf einen Eintrittspunkt (22, 16) des drahtlosen Kommunikationsnetzes hinweist, welches eine Presence Service-Nachricht verarbeiten kann, und Veröffentlichen eines Service Resource Records in dem Domain Name Service System, das auf den Eintrittspunkt (22, 16) hinweist, welcher ebenfalls eine Instant Messaging Service-Nachricht verarbeiten kann;
Mittel zum Abfragen (315, 415) einer ersten Datenbank (24) zum Bestimmen einer Benutzeridentität innerhalb des drahtlosen Kommunikationssystems aufgrund von Identitätsinformationen, die in der empfangenen Nachricht angegeben sind; sowie
Mittel zum Abfragen (330) einer zweiten Datenbank (34) für einen Netzknoten, der für die Benutzeridentität (18) zuständig ist, falls die empfangene Nachricht eine Instant Messaging Service-Nachricht ist; sowie
Mittel zum Übermitteln der Nachricht (340) an den Netzknoten (18), der für die Benutzeridentität zuständig ist.

8. System nach Anspruch 7, wobei das drahtlose Kommunikationsnetz ein Internet-Protokoll-Multimedia-Kernnetz-Subsystem ist.

9. System nach Anspruch 7, ferner umfassend:
Mittel (18) zum Konfigurieren eines ersten Domain-Namens aufgrund eines Domain-Namens, der in einer Nachricht angegeben ist,
Mittel (18) zum Durchführen einer Systemabfrage nach einem Domain-Namen (230), und
Mittel (18) zum Übermitteln einer Nachricht an eine Netzadresse, die durch eine Systemabfrage nach einem Domain-Namen erhalten wurde.

10. System nach Anspruch 7 oder 9, ferner umfassend:
Datenbank (24) zum Speichern von Informationen zur Benutzeridentifikation für ein Messaging Protocol und entsprechende Benutzeridentitäten für das drahtlose Kommunikationsnetz.

11. System nach Anspruch 7, ferner umfassend einen Protokoll-Gateway-Knoten (22).

12. System nach Anspruch 7, ferner umfassend einen Presence-Server-Knoten (25).

## Revendications

1. Procédé destiné à traiter des messages dans un réseau de communication sans fil (12), comprenant les étapes ci-dessous consistant à :
recevoir un message, ledit message étant soit un message de service de présence, soit un message de service de messagerie instantanée ;
publier des enregistrements de ressources de service dans un système de service de noms de domaine pointant vers un point d'entrée (22, 16) du réseau de communication sans fil, en mesure de traiter un message de service de présence et qui publie un enregistrement de ressource de service dans un système de service de noms de domaine pointant vers le point d'entrée (22, 16) qui est en outre en mesure de traiter un message de service de messagerie instantanée ;
si le message reçu est un message de service de présence, interroger (315, 415) une première base de données quant à une identité d'utilisateur (320, 420) du réseau de communication sans fil, correspondant aux informations d'identité indiquées dans le message de service de présence reçu ;
si le message reçu est un message de service de messagerie instantanée, interroger ladite première base de données (24) quant à une identité d'utilisateur du réseau de communication sans fil, correspondant aux informations d'identité indiquées dans le message de service de messagerie instantanée reçu ;
si le message est un message de service de messagerie instantanée, interroger (330) une seconde base de données (34) quant à un noeud de réseau (18) desservant l'identité d'utilisateur ; et
transmettre le message (340) au noeud de réseau (18) desservant l'identité d'utilisateur.

2. Procédé selon la revendication 1, dans lequel le message est reçu par un noeud de fonction de commande de session d'appel.

3. Procédé selon la revendication 1, dans lequel le réseau de communication sans fil est un sous-système de réseau fédérateur multimédia de protocole Internet.

4. Procédé selon la revendication 1, comprenant l'étape consistant à transmettre le message (425) à un serveur de présence (25) si le message est un message de service de présence.

5. Procédé selon la revendication 1, dans lequel la seconde base de données est un serveur d'abonnés résidentiels (34).

6. Procédé selon la revendication 1, dans lequel le noeud de réseau desservant l'identité d'utilisateur est un noeud de fonction de commande de session d'appel de desserte (18).

7. Système d'un système de communication sans fil, comprenant :
un moyen pour recevoir un message, ledit message étant soit un message de service de présence, soit un message de service de messagerie instantanée ;
un moyen pour publier des enregistrements de ressources de service dans un système de service de noms de domaine pointant vers un point d'entrée (22, 16) du réseau de communication sans fil, en mesure de traiter un message de service de présence et qui publie un enregistrement de ressource de service dans un système de service de noms de domaine pointant vers le point d'entrée (22, 16) qui est en outre en mesure de traiter un message de service de messagerie instantanée ;
un moyen pour interroger (315, 415) une première base de données (24) en vue de déterminer une identité d'utilisateur dans le réseau de communication sans fil, sur la base d'informations d'identité indiquées dans le message reçu ; et
un moyen pour interroger (330) une seconde base de données (34) quant à un noeud de réseau desservant l'identité d'utilisateur (18), si le message reçu est un message de service de messagerie instantanée ; et
un moyen pour transmettre le message (340) au noeud de réseau (18) desservant l'identité d'utilisateur.

8. Système selon la revendication 7, dans lequel le réseau de communication sans fil est un sous-système de réseau fédérateur multimédia de protocole Internet.

9. Système selon la revendication 7, comprenant en outre :
un moyen (18) pour établir un premier nom de domaine sur la base d'un nom de domaine indiqué dans un message ;
un moyen (18) pour mettre en oeuvre une requête de système de nom de domaine (230) ; et
un moyen (18) pour transmettre un message vers une adresse réseau obtenue à partir d'une requête de système de nom de domaine.

10. Système de la revendication 7 ou 9, comprenant en outre :
une base de données (24) pour stocker des informations d'identification d'utilisateur pour un protocole de messagerie et les identités d'utilisateur correspondantes pour le réseau de communication sans fil.

11. Système selon la revendication 7, comprenant en outre un noeud de passerelle de protocoles (22).

12. Système selon la revendication 7, comprenant en outre un noeud de serveur de présence (25).
